# EUROPEAN PATENT SPECIFICATION

(11) **EP 3 908 745 B1**
(45) Date of publication and mention of the grant of the patent: **28.06.2023**
(21) Application number: 19890641.4
(22) Date of filing: 05.04.2019
(51) Int. Cl.: F03D 3/06, F03D 7/00, F03D 3/00

(54) **VERTICAL AXIS GLIDING BLADE WIND TURBINE**
WINDTURBINE MIT VERTIKALER ACHSE UND GLEITSCHAUFEL
ÉOLIENNE À PALE PLANANTE À AXE VERTICAL

(30) Priority: 26.11.2018 IN 201841044370
(43) Date of publication of application: 17.11.2021
(73) Proprietor: Damodaran, Ethirajulu, Chennai 600017 (IN)
(72) Inventor: Damodaran, Ethirajulu, Chennai 600017 (IN)
(74) Representative: Jeck, Anton
(86) International application number: PCT/IN2019/000010
(87) International publication number: WO 2020/110133

(56) References cited:
- WO-A1-2017/179063
- WO-A2-2011/065720
- NL-A- 9 001 343
- US-A- 512 712

## Description

### Background:

For the last so many years, windmills operating all over the world are designed using fixed blade turbines. Further, to increase the torque, long narrow blades with bulge at the bottom have been used. Wind drag and consequent reduction in conversion efficiency have been the in-built disadvantages of these designs.

Mr. Alfred Betz, the pioneer in fluid dynamics has declared that at any given time, a maximum of 59% of the wind energy can be converted into kinetic energy on the basis of fluid dynamics. But, till date, because of the above stated drag factor, all the current wind mills are able to harvest only 30 to 35% of the wind energy and convert it into electrical energy.

To get over these drawbacks, attempts were made in horizontal axis designs, to increase efficiency by designing various modifications to the blades or providing unimaginably long blades or with a folded leaf like blade with a slight curve at their tip. Only very marginal improvements could be achieved due to these changes. Thus the largest windmill weighing around 3500 tones could produce only 8 megawatts of power so far.

in the vertical axis designs, attempts were made to alter the orientations of the blade and frame structures but could not achieve any major improvement. Thus, till date, the horizontal axis windmills are the widely prevalent: power producing windmills throughout the world.

To ensure free uninterrupted flow of wind, the windmills are also being located in the mid-seas, but with very limited further improvements in power generation.

A wind turbine representing the prior art is disclosed e.g. in NL 9 001 343 A.

### Summary of the present invention:

To overcome the above stated deficiencies in the current designs of windmills, it is now being proposed to make use of a vertical axis wind turbine. The turbine blades are designed to change their orientation from knife to blade and then blade to knife while rotating, eliminating wind drag and ensuring free flow of wind and smooth rotation leading to increased conversion of the wind energy into electrical energy. Unlike the existing fixed blades, they are unique in design being flat, broad and long.

This novel design can be used for replacing all the existing and operating windmills all over the world by upgrading to this gliding design leading to multiple fold increase in the operating efficiency and power generation at minimal cost. This design would be ideally suited for roof top wind mills due its height.

Thus, as incorporated in this invention, the turbine blade travels along with the wind being pushed by it, with the blade side facing the wind along its semicircular trajectory till it reaches the half way mark of a circle. In other words, for one half of the circle (180 degrees) it travels as a blade and on reaching half way mark of the circle, aided by the tilting lever, it tilts and changes its shape into knife and covers the remaining half of the circle(180 degrees) as such by gliding upon the glide ring.

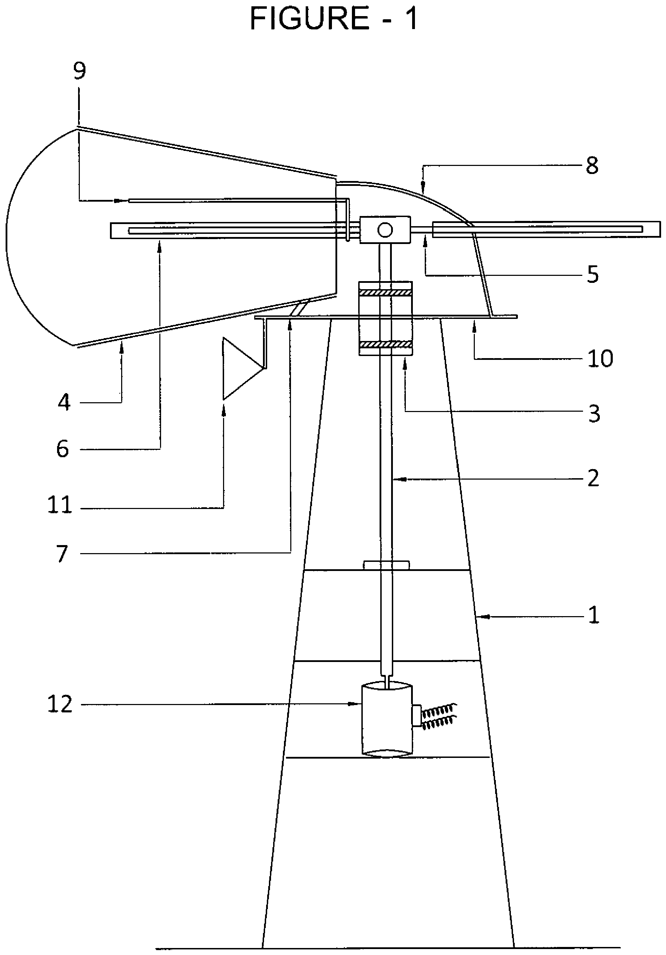

In Figure 1, the above embodiment is shown pictorially as an erected windmill tower. The mill tower(1) vertical shaft(2), shaft housing(3), blades(4),central hub(5), blade shaft(6), tilting lever (7), glide ring (8),blade direction stabilizer (9),base plate(10) wind wane(11) and alternator(12).
Figure 2 shows the part of the windmill as face down view, showing the blades(4) , the central hub(5) glide ring(8)and two of the blades in blade orientation and the remaining two in knife orientation.
Figure 3 shows the blade(4) semi circular glide ring(^{®} ),base plate(10), tilting lever(7) central hub(5) and wind wane(11).

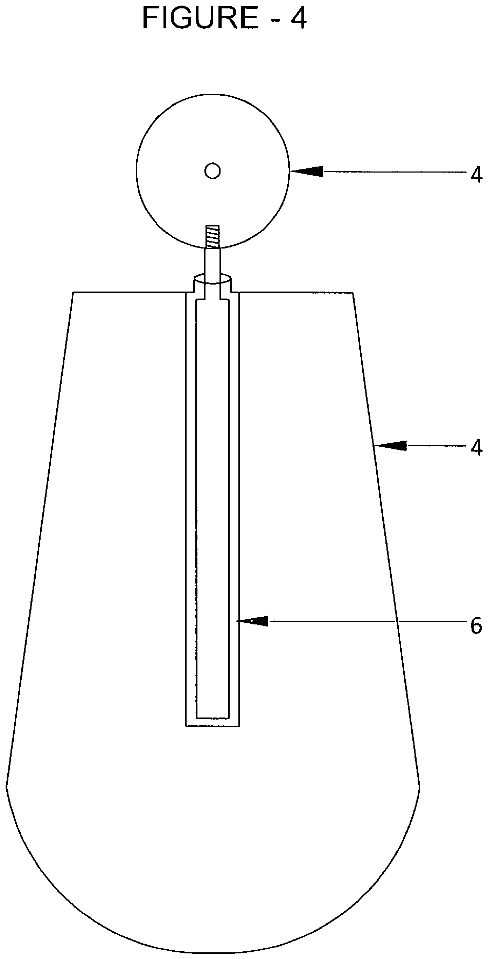

Figure 4 shows the central hub (5) blade (4) and blade shaft (6).

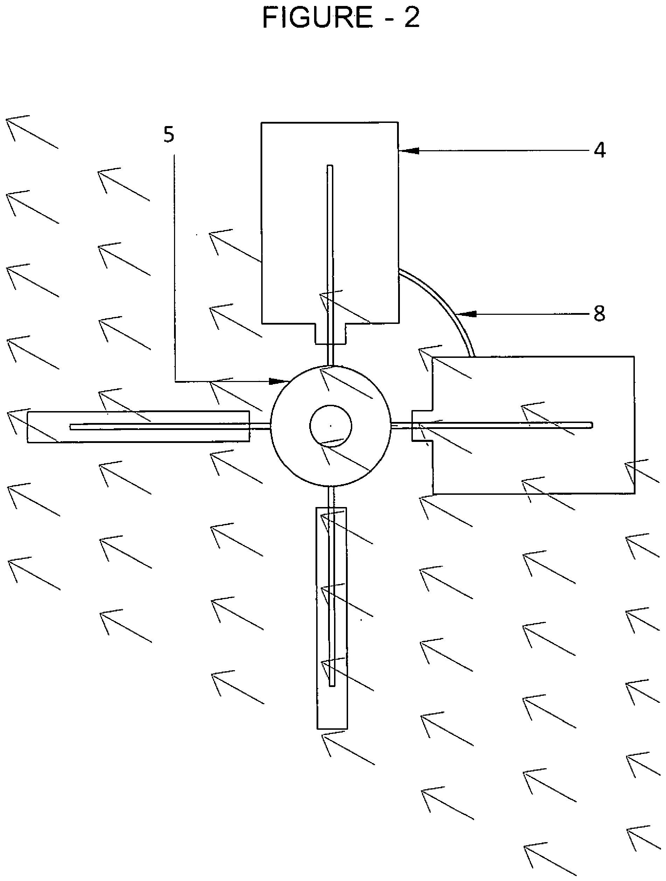

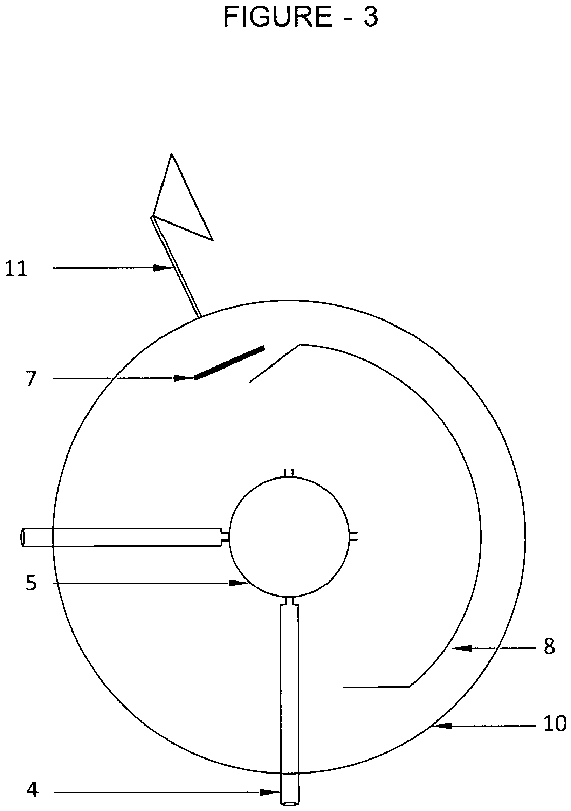

Figure 2 and 3 also show the functioning of the tilting blades(4) and central hub (5) as side view, starting from point X which is at 0 degree on the horizontal line to point Y which is at 180 degrees , the blade travels pushed by the wind. On reaching point Y , it gets tilted and varies its orientation into a knife form and continues its travel as such for the remaining 180 degrees of its circular orbit, piercing through the wind eliminating wind drag and resistance.

### Operating Mechanism of this Design:

As given in Figures 2 and 3, when wind hits the blade A at point X facing it, the turbine starts to move, whereby subsequent blade D which is near point X shifts its orientation from the knife mode to blade mode, aided by the glide ring's abrupt 90 degree steep fall and the blades rear end which is heavier than the front end, - enabling it to glide down and tilt as a blade .

During this process when blade B in blade mode which is close to point Y, gets pushed upwards by the glide ring's tilting lever, making it to change its orientation from blade to knife and travel as such along the semicircle riding upon the glide ring, till it reaches point X, crossing point Y-2..

When this happens, blade C which is in knife orientation near point Y-2 travels onwards as such till it reaches point X and shifts its orientation from knife to blade mode aided by the glide ring's abrupt end and steep fall.

The simultaneous change in orientation of the four blades, from blade mode to knife mode and knife mode to blade mode, with the aid of the wind thrust is achieved by the unique design of the tilting lever and gliding blades.

The shaft of the blades are uniquely designed whereby the blade is securely fastened to the blade shaft (6) by its reduced handle cum neck and sealed with a cup and locked with provision of a hole in the middle for facilitating easy rotation of the blade alone. This narrow neck prevents the blade from sliding out of the shaft in its circular orbit. The shaft is firmly secured to the hub by means of techniques well known to the art.

Wind being known for its varying speed and direction, would make the blades to wobble in their circular orbits in both the orientations. Safeguards should therefore be made at all times to arrest this. To achieve this, the semicircular glide ring's elevation arrests the blades in knife mode from reversing their orientation and like wise the blade direction regulator arrests the blades from sliding back into knife mode.

To eliminate friction, noise and loss of torque, the glide ring, tilting lever and blade handles are lined with suitable friction eliminating materials.

At times of emergency, when the turbine needs to be halted, a design provision is made to withdraw the tilting lever whereby the blades' orientation as blade is prolonged, leading to halting of the turbine due to the wind flow on all the four blades arresting the turbine's rotation.

## Claims

1. A wind generator consisting of a vertical axis shaft (2) incorporating gliding-varying blade (4) comprising of
a) a vertical shaft (2) securely fastened with a turbine hub (5) attached with four gliding - varying blades (4), adapted to glide along a semicircular glide ring (8) with a tilting lever (7)
b) Where the position of the blade shaft (6) is fixed, while the attached blades (4) alone revolve around it changing its orientation from the knife mode to blade mode and vice versa.
c) Where the blade (4) is securely fastened to the blade shaft (6) by its reduced handle cum neck and sealed with a cup and locked with provision of a hole in the middle for facilitating easy rotation of the blade alone.
d) Where the blade's (4) varying orientation is achieved by the tilting lever (7) mounted on the base plate (10), which starts rising from its initial point, till it reaches the blade shaft (6) level gradually and then ends abruptly after covering halfway mark of its circular orbit with a steep fall.
e) Where the blade (4) guided by the semicircular glide rings tilting lever (7) enables the tilting of the blade's orientation from blade to knife.
f) Where the blade (4) aided by the semicircular glide ring's (8) steep and sudden fall changes its orientation from knife to blade.
g) Where the blade (4) direction stabilizer (9) ensures the smooth rotation of the turbine without being disturbed by the changing wind, course and direction preventing the resultant wobbling.
h) Where the semicircular glide ring (8) likewise prevents the wobbling of the blade (4) while it is in its knife mode of orbit.

2. The windmill turbine of claim 1 wherein the shape of the blade (4) is designed in a rectangular, flat and broad manner for harvesting maximum wind thrust leading to increased power generation.

3. The wind mill turbine of claim 1, wherein the design of the gliding- varying blade (4) turbine mounted on top of the shaft (6) by its sideways circular movement facilitates mounting broad and long blades leading to increased torque and power generation. The windmill turbine of claim 1, wherein with four blades (4), one each at 90-degree angle of variation, enables mounting of broad and long blades (4) Resulting in uninterrupted harvesting of the wind thrust leading to increased harvesting of torque and maximization of power generation.

## Patentansprüche

1. Windgenerator, aufweisend eine Welle mit vertikaler Welle (2), mit einem gleitend beweglichen Flügel (4), der Windgenerator aufweisend:
a) eine vertikale Welle (2), die fest mit einer Turbinennabe (5) verbunden ist, an der vier gleitende, sich verändernde Schaufeln (4) angebracht sind, die entlang eines halbkreisförmigen Gleitrings (8) mit einem Kipphebel (7) gleiten können
b) Die Position der Schaufelwelle (6) ist fixiert, während die angebrachten Messer (4) allein um sie herum rotieren und ihre Ausrichtung vom Messer- in den Messermodus und umgekehrt ändern.
c) Die Schaufel (4) ist mit ihrem reduzierten Griffhals sicher an der Schaufelwelle (6) befestigt und mit einem Becher abgedichtet und verriegelt, wobei in der Mitte ein Loch vorgesehen ist, um die einfache Drehung der Schaufel allein zu ermöglichen.
d) Die wechselnde Ausrichtung der Schaufel (4) wird durch den auf der Grundplatte (10) montierten Kipphebel (7) erreicht, der von seinem Ausgangspunkt aus ansteigt, bis er allmählich die Höhe der Schaufelwelle (6) erreicht und dann abrupt nach Überwindung der Hälfte seiner Kreisbahn mit einem steilen Fall endet.
e) Wo die Schaufel (4) durch die halbkreisförmigen Gleitringe geführt wird, ermöglicht der Kipphebel (7) das Kippen der Ausrichtung der Klinge von der Klinge zum Messer.
f) Wenn die Schaufel (4), unterstützt durch den steilen und plötzlichen Fall des halbkreisförmigen Gleitrings (8), ihre Ausrichtung von Messer zu Klinge ändert.
g) Der Richtungsstabilisator (9) für die Rotorblätter (4) sorgt für eine gleichmäßige Drehung der Turbine, ohne dass diese durch den wechselnden Wind, den Kurs und die Richtung gestört wird, und verhindert so das daraus resultierende Taumeln.
h) Der halbkreisförmige Gleitring (8) verhindert ebenfalls das Taumeln der Schaufel (4), wenn sie sich in ihrer Messerumlaufbahn befindet.

2. Windturbine nach Anspruch 1, wobei die Form des Blattes (4) so gestaltet ist, dass
rechteckig, flach und breit, um den maximalen Windschub zu nutzen und so die Stromerzeugung zu steigern.

3. Windturbine nach Anspruch 1, wobei die Konstruktion der Turbine mit gleitend variierenden Flügeln (4), die oben auf der Welle (6) montiert sind, durch ihre seitliche kreisförmige Bewegung die Montage breiter und langer Flügel erleichtert, was zu einem erhöhten Drehmoment und einer erhöhten Energieerzeugung führt. Windkraftanlage nach Anspruch 1, bei der vier Flügel (4), von denen jeder einen Variationswinkel von 90 Grad aufweist, die Montage von breiten und langen Flügeln (4) ermöglichen, was zu einer ununterbrochenen Nutzung des Windschubs und damit zu einer erhöhten Nutzung des Drehmoments und einer Maximierung der Stromerzeugung führt.

## Revendications

1. Générateur éolien présentant une vague munie d'une vague verticale (2) avec une aile mobile en mouvement (4). Le dit générateur éolien présente:
a- Une vague verticale (2) qui est reliée solidement à un moyen de turbine (5) où sont disposées quatre aubes mobiles en mutation (4) qui peuvent coulisser tout au long d'une bague de glissement semi-circulaire (8) munie d'un culbuteur (7).
b- La position de la vague de l'aube (6) est fixée, tandis que les lames disposées (4) tournent seules autour d'elle et changent son alignement de la lame et du mode de la lame ainsi que vice versa.
c- L'aube (4) est fixée avec son col de poignée réduit sûrement au niveau de la vague de l'aube (6) et est étanchéifié et verrouillé par le biais d'un gobelet où un orifice est prévu au milieu pour faciliter la rotation simple de l'aube.
d- L'alignement changeant de l'aube (4) est obtenu par le biais du culbuteur montant monté sur la plaque de base (7) partant de son point de départ jusqu'à qu'il atteint à titre progressif la hauteur de la vague de l'aube (6) et prend fin par la suite à titre abrupte après avoir surmonté la moitié de son chemin circulaire après une chute raide.
e- Où l'aube (4) est conduite à travers les anneaux glissants semi-circulaires, le culbuteur (7) facilite l'inclinaison de l'alignement de la lame et de la lame vers le couteau.
f- L'aube (4), soutenu par la chute raide et soudaine de la bague de glissement semi-circulaire (8), change son alignement du couteau vers la lame.
g- Le stabilisateur de l'orientation (9) pour les pales (4) garantit une rotation uniforme de la turbine sans que cette dernière ne soit perturbée par le vent en mutation, le cours et l'orientation et empêche par la même occasion le titubage en résultant.
h- La bague de glissement semi-circulaire (8) empêche aussi le titubage de l'aube (4) se trouvant au niveau de l'orbite de la lame.

2. Turbine éolienne selon la revendication 1 où la forme de la feuille (4) est formée de telle sorte qu'elle est rectangulaire, plate et large pour bénéficier au maximum de la poussée éolienne et pour ainsi faire augmenter la production d'énergie.

3. Turbine éolienne selon la revendication 1 où la construction de la turbine avec des ailes coulissantes variables (4) sont montées en haut au niveau de la vague (6) et qui par le biais de son mouvement latérale circulaire facilite le montage d'ailes plus larges et plus longues ce qui produit un couple de rotation élevé et une production d'énergie élevée. Il s'agit d'une installation éolienne selon la revendication 1 présentant quatre ailes (1) présentant chacune d'elles un angle de variation de 90 grade facilitant le montage d'ailes larges et longues (4) ce qui produit un usage sans intermittence de la poussée éolienne et ainsi un usage élevé du couple de rotation et une maximation de la production d'énergie.
